## Europäisches Patentamt
## European Patent Office
## Office européen des brevets

(19)

(11) Veröffentlichungsnummer: **0 144 066**

**B1**

(12) **EUROPÄISCHE PATENTSCHRIFT**

(45) Veröffentlichungstag der Patentschrift:
**13.09.89**

(51) Int. Cl.⁴: **H 04 N 7/13**

(21) Anmeldenummer: **84114395.1**

(22) Anmeldetag: **28.11.84**

(54) **Schaltungsanordnung zur schnellen Ermittlung der betragsmässig grössten Differenz von drei binär dargestellten Zahlenwerten.**

(30) Priorität: **30.11.83 DE 3343404**

(43) Veröffentlichungstag der Anmeldung:
**12.06.85 Patentblatt 85/24**

(45) Bekanntmachung des Hinweises auf die Patenterteilung:
**13.09.89 Patentblatt 89/37**

(84) Benannte Vertragsstaaten:
**AT CH DE FR IT LI**

(56) Entgegenhaltungen:
**EP-A-0 141 127**
**US-A-4 200 886**
**US-A-4 386 366**

**ELECTRICAL COMMUNICATION, Band 51, Nr. 2, 1976, Seiten 100-106, New York, US; H.J. KLUTZ u.a.: "Test system for digital TV transmission" PROCEEDINGS OF THE INTERNATIONAL ZURICH SEMINAR ON DIGITAL COMMUNICATIONS, Zürich, 12.-15. März 1974, Seiten C1(1)-C1(7), IEEE, New York, US; H.G. MUSMANN: "A comparison of extended differential coding schemes for video signals"**

(73) Patentinhaber: **Siemens Aktiengesellschaft, Wittelsbacherplatz 2, D-8000 München 2 (DE)**

(72) Erfinder: **Reimann, Udo, Dipl.- Ing., Johann-Clanze- strasse 43, D-8000 München 70 (DE)**

## Beschreibung

Die Erfindung betrifft eine Schaltungsanordnung zur schnellen Ermittlung der betragsmäßig größten Differenz zwischen drei binären Zahlenwerten, zur Zuordnung des Betrages der größten Differenz zu einem von mehreren Zahlenbereichen und zur Erzeugung eines dem Bereich entsprechenden Steuersignals, insbesondere bei einer Anordnung zur zweidimensionalen DPCM-Codierung mit einem umschaltbaren Quantisierer und einer Quantisierersteuerung, der jeweils der zuletzt errechnete einen Bildpunktsignalwert darstellende Zahlenwert und über Register diesem benachbarte Bildpunktsignalwerte zugeführt sind, wobei eine Vergleichseinrichtung und eine Extremwertsteuerung zur Ermittlung des größten und des kleinsten Zahlenwertes der benachbarten Bildpunktsignalwerte vorgesehen ist, mit einer Subtraktionseinrichtung zu Bildung der Differenzen, wie in einer älteren europäischen Patentanmeldung EP-A-141 127 beschrieben.

Bei der Verarbeitung von Daten, insbesondere bei der Codierung von Fernsehsignalen, tritt häufig das Problem auf, daß von mehreren Zahlenwerten die größte Differenz ermittelt werden soll. Dies ist beispielsweise bei der DPCM-Codierung von Fernsehsignalen der Fall, bei der abhängig vom Kontrast eines zu codierenden Bildpunktes zu den ihn umgebenden Bildpunkten ein Quantisierer gesteuert werden soll. Liegt nur ein geringer Kontrast vor, der bei der gesteuerten DPCM-Codierung meist als "Aktivität" bezeichnet wird, so erfolgt die Codierung in kleinen Stufen, während bei großer Aktivität größere Quantisierungsschritte verwendet werden. Hierdurch wird eine Verbesserung der Bildqualität erzielt. In der älteren Patentanmeldung EP-A-141 127 ist dieses Verfahren näher erläutert. Zeitkritisch ist jeweils die Verarbeitung des letzten vor dem zu codierenden Bildpunkt liegende Bildpunktsignal. Alle anderen Bildpunktsignale liegen dem Codierer, bzw. empfangsseitig dem Decodierer, bereits länger vor. Hierdurch kann bereits eine Vorverarbeitung erfolgen, so daß nur noch Rechenoperationen durchgeführt werden müssen, an denen der letzte Bildpunktsignalwert A beteiligt ist.

Zwischen zwei Extremwerten E und F der Bildpunktsignalwerte und dem letzten Bildpunktsignalwert A werden Differenzen gebildet. Aus den Vorzeichen dieser Differenzen wird die maximale Differenz ermittelt und über Multiplexer durchgeschaltet. Obwohl eine Differenzauswahlschaltung zur Ermittlung der maximalen Differenz nur wenige Gatterschaltungen enthält, bedingen diese Laufzeiten, die bei höheren Verarbeitungsgeschwindigkeiten bei jetzt üblichen Schaltkreistechniken nicht zur Verfügung stehen.

Nach der Ermittlung der größten Differenz wird diese einer Schwellwertlogik zugeführt, die ein dem zugehörigen Zahlenbereich entsprechendes Steuersignal abgibt. Hierdurch ergibt sich eine zusätzliche Laufzeit.

Es ist die Aufgabe der Erfindung, eine Schaltungsanordnung zur schnellen Ermittlung der betragsgemäß größten Differenz von drei binär dargestellten Zahlenwerten und zur Codierung eines Steuersignals entsprechend der Zugehörigkeit zu einem Zahlenbereich anzugeben.

Ausgehend vom eingangs beschriebenen Stand der Technik wird diese Aufgabe dadurch gelöst, daß für die Zuordnung des Betrages der Differenzen zu einem Zahlenbereich nur die erforderlichen nach dem Vorzeichenbit höchstwertigen Betragsbits den Eingängen einer zweistufigen Logikschaltung zugeführt sind, daß für jedes Steuerbit des Steuersignals eine Teillogikschaltung vorgesehen ist, deren aus NOR/OR-Gattern und AND/NAND-Gattern bestehende erste Logikstufe eine getrennte Codierung für positive und negative Differenzen parallel durchführt, daß allen Gattern der ersten Logikstufen der Logikschaltung zur Auswahl des der größten betragsmäßigen Differenz entsprechenden Steuersignals die Vorzeichenbits zugeführt sind und daß jeweils die Ausgänge aller Gatter der ersten Stufe einer Teillogikschaltung jeweils mit den Eingängen einer ODER-Schaltung verknüft sind, an deren Ausgang jeweils ein Steuerbit abgegeben wird.

Vorteilhaft bei dieser Schaltungsanordnung sind erzielbare kurze Laufzeiten. Die Differenzen der binären Zahlenwerte werden der zweistufigen Logikschaltung LSI zugeführt. In der ersten Logikstufe erfolgt bereits die Codierung der Steuerbits des Steuersignals. Gleichzeitig erfolgt durch die Vorzeichenbits, die ebenfalls den Gattern der ersten Logikstufe zugeführt sind, die Auswahl der Betragsbits der maximalen Differenz und hierdurch die Auswahl der Steuerbits. Dies ergibt eine minimale Laufzeit. Die Vorzeichenbits müssen selbstverständlich einigen Gatterschaltungen der ersten Logikstufe invertiert zugeführt werden, um die Bitkombinationen der maximalen Differenz aus den drei Differenzen auszuwählen.

Die beschriebene Anordnung kann vorteilhaft in integrierter Schaltkreistechnik ausgeführt werden.

Es ist vorteilhaft, daß von jeder Differenz nur das Vorzeichenbit und die drei folgenden höchstwertigen Betragsbits der zweistufigen Logikschaltung zugeführt sind.

Für die meisten Entscheidungen ist die Betrachtung der drei höchstwertigen Bits ausreichend. Hierdurch wird der Schaltungsaufwand erheblich reduziert. Durch die drei höchstwertigen Bits ist eine Aufteilung in maximal zweimal 8 Zahlenbereiche möglich.

Es ist bei vielen Anwendungsfällen zweckmäßig, daß der Zahlenwertvorrat der Differenzen in Zahlenbereiche aufgeteilt ist, deren Grenzen durch eine Potenz von 2 mit ganzzahligen Exponenten entsprechend dem Stellenwert des niederwertigsten für die Festlegung der Zahlenbereiche verwendeten Bits oder durch ein ganzzahliges Vielfaches dieser Potenz gebildet werden und daß vier Zahlenbereiche vorgesehen sind, die von den beiden verwendeten niederwertigeren Betragsbits festgelegt sind und größere Differenzen dem größten dieser Zahlbereiche zugeordnet werden.

In vielen Fällen dient das höchstwertige Betragsbit nur als Überlaufbit. Der Hauptanteil der Zahlenwerte bewegt sich in dem von den folgenden niederwertigeren Bits angegebenen Bereichen. Es ist daher zweckmäßig, diese Bits auch zur Bereichseinteilung zu verwenden.

Es ist vorteilhaft, daß zwei Teillogikschaltungen mit jeweils 3 NOR-Gattern und jeweils 3 AND-Gattern vorgesehen sind, deren Ausgänge jeweils mit den Eingängen eines NOR-Gatters verbunden sind, daß jeweils einem NOR-Gatter und einem AND-Gatter der ersten Teillogikschaltung die beiden höchstwertigen Betragsbits der drei Differenzen zugeführt sind, daß jeweils einem NOR-Gatter und einem AND-Gatter der zweiten Teillogikschaltung jeweils das höchstwertige Betragsbit und das verwendete niederwertigste Betragsbit zugeführt sind und daß die Vorzeichenbits der Differenzen jeweils weiteren Eingängen aller Gatter der ersten Logikstufen zum des der größten Differenz entsprechenden Steuersignals zugeführt sind.

Diese Schaltungsausführung entspricht einer gebräuchlichen Bereichseinteilung. Sie ist mit relativ geringem Aufwand bei geringen Laufzeiten zu realisieren. Selbstverständlich können NOR- und AND-Gatter durch ODER-Gatter und NAND-Gatter ersetzt werden. Die ODER-Schaltung, deren Eingänge an die Ausgänge der Gatter der ersten Logikstufe angeschlossen sind, ist dann durch eine AND-Schaltung zu ersetzen.

Die Erfindung wird anhand eines Ausführungsbeispiels näher erläutert.

Es zeigen

Fig. 1 ein Prinzipschaltbild der erfindungsgemäßen Schaltungsanordnung,

Fig. 2 eine Vorzeichentabelle,

Fig. 3 ein Ausführungsbeispiel der Logikschaltung und

Fig. 4 eine Codiertabelle für die Logikschaltung.

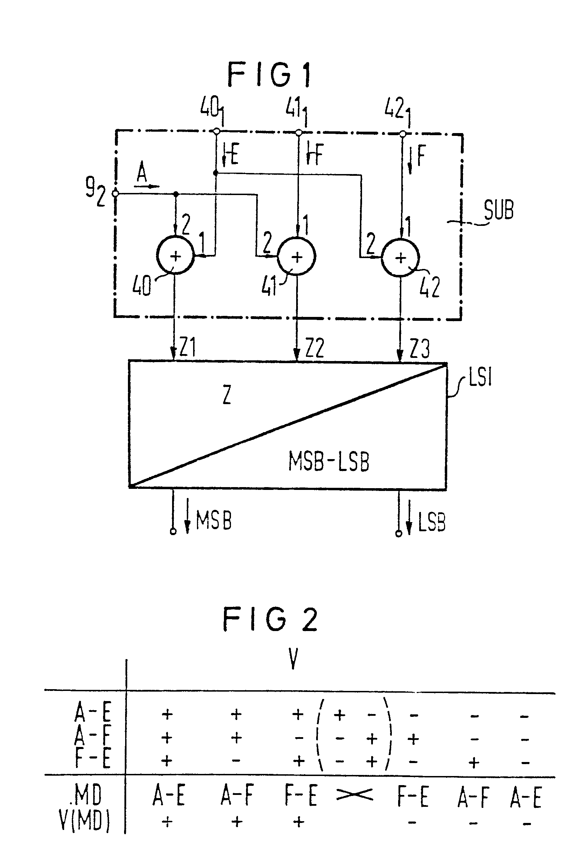

Das Prinzipschaltbild (Fig. 1) der erfindungsgemäßen Schaltungsanordnung enthält eine Subtraktionseinrichtung SUB und eine Logikschaltung LSI.

Die Subtraktionseinrichtung enthält drei Addierer 40, 41 und 42. Dem zweiten Eingang 2 des ersten Addierers 40 und dem zweiten Eingang 2 des zweiten Addierers 41 wird über einen Eingang $9_2$ der Subtraktionseinrichtung der aktuelle Zahlenwert A, dieser steht als letzter zur Weiterverarbeitung zur Verfügung, zugeführt. Über einen zweiten Eingang $40_1$ der Subtraktionseinrichtung wird dem ersten Eingang 1 des ersten Addierers 40 und dem zweiten Eingang 2 des dritten Addierers 42 ein zweiter invertierter Zahlenwert -E zugeführt. Über einen dritten Eingang $41_1$ der Subtraktionseinrichtung wird der dritte invertierte Zahlenwert -F dem ersten Eingang des zweiten Addierers 41 zugeführt; derselbe nichtinvertierte Zahlenwert F wird über einen vierten Eingang $42_1$ der Subtraktionseinrichtung dem ersten Eingang 1 des dritten Addierers 42 zugeführt. Die Ausgänge der Addierer sind mit der Logikschaltung LSI verbunden. Statt des invertierten Zahlenwertes kann natürlich auch das Zweierkomplement zur genaueren Berechnung der exakten Differenzen verwendet werden.

In der Subtraktionseinrichtung SUB werden zwischen den drei Zahlenwerten A, E, F die drei Differenzen $Z1 = A - E$, $Z2 = A - F$ und $Z3 = F - E$ gebildet. In der Logikschaltung wird bereits ein hier zwei Bits umfassendes Steuersignal codiert, das abhängig von der Größe des Betrags der jeweiligen Differenz ist. Das zwei Bits umfassende Steuersignal MSB-LSB der größten Differenz wird von der Logikschaltung durchgeschaltet; die zwei Bits des Steuersignals sind mit MSB und LSB bezeichnet.

Wie bereits erwähnt, erfolgt die Ermittlung der max. Differenz durch Auswertung der Vorzeichen der Differenzen. Eine entsprechende Vorzeichentabelle ist in Fig. 2 dargestellt. Von den acht dargestellten Vorzeichenkombinationen sind nur sechs wirklich möglich. Aus den Vorzeichenkombinationen wird die betragsmäßig maximale Differenz MD ermittelt. Zusätzlich ist noch das Vorzeichen V (MD) der maximalen Differenz MD angegeben.

Anhand der Vorzeichentabelle Fig. 2 soll gezeigt werden, wie anhand der Vorzeichen V der Differenzen die maximale Differenz MD ermittelt werden kann. Ein positives Vorzeichen wird binär im allgemeinen als logische Null und ein negatives Vorzeichen als logische Eins dargestellt. Bei einer Differenz von Null ist das Vorzeichen positiv. Die Auswertung soll anhand der letzten beiden Spalten der Tabelle näher erläutert werden.

Den Vorzeichen der zweitletzten Spalte ist zu entnehmen:

$$A < E, A < F, F \geqslant E$$

Folglich ist die betragsmäßig größte Differenz A - F.

Der letzten Spalte ist zu entnehmen $E > A$, $F > A$, $E > F$. Deshalb ist die betragsmäßig größte Differenz MD: A - E.

Es ist selbstverständlich, daß auch andere Differenzen, also statt A - E, A - F und F - E auch z. B. E - A, A - F und E - F gebildet werden können.

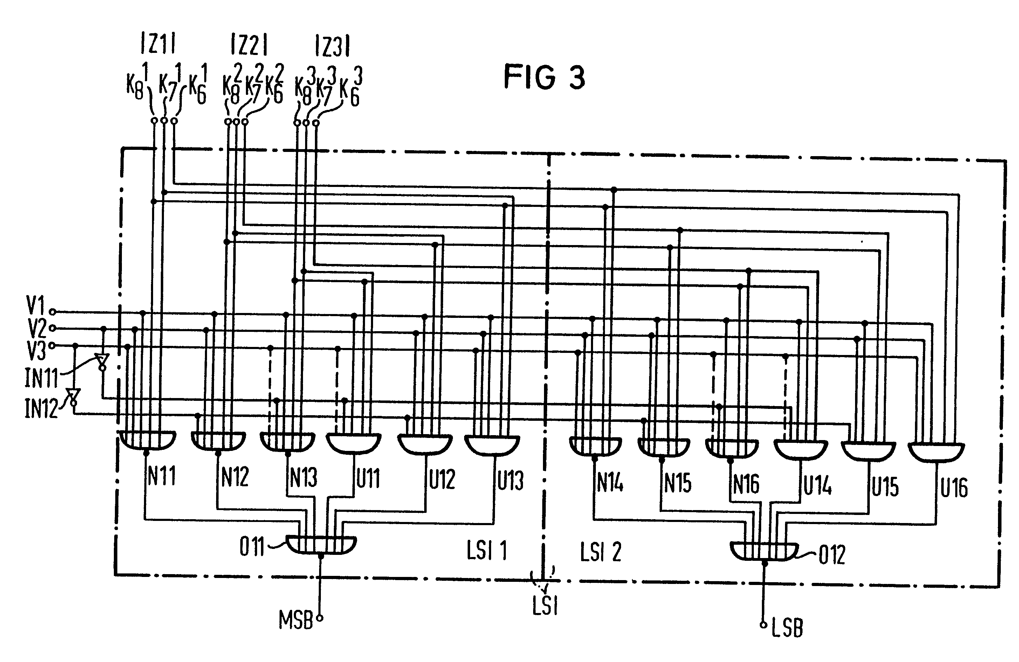

Die in Fig. 3 dargestellte Logikschaltung LSI enthält eine erste Teillogikschaltung LSI1 und eine zweite Teillogikschaltung LSI2. Die erste Logikstufe der ersten Teillogikschaltung LSI1 enthält die NOR-Gatter N11, N12 und N13 sowie die AND-Gatter U11, U12 und U13. Die Ausgänge dieser Gatter sind mit den Eingängen einer invertierenden ODER-Schaltung O11 verbunden. Die drei höchstwertigen Betragsbits der drei Differenzen Z1, Z2 und Z3 sind mit $K_8$, $K_7$ und $K_6$ bezeichnet. Die Zugehörigkeit zu einer der Differenzen ist durch eine hochgestellte Zahl deutlich gemacht. So sind die beiden höchstwertigen Betragsbits $K_8^1$ und $K_7^1$ der ersten Differenz Z1 mit zwei Eingängen des ersten NOR-Gatters N11 verbunden und mit zwei Eingängen des AND-Gatters U13. In entsprechender Weise sind die Betragsbits $K_8^2$ und $K_7^2$ der zweiten Differenz Z2 mit Eingängen der Gatter N12 und U12 verbunden und die entsprechenden Betragsbits der dritten Differenz Z3 mit Eingängen der Gatter N13 und O11. Das erste Vorzeichenbit V1 ist direkt jeweils einem weiteren Gattereingang zugeführt; das zweite Vorzeichenbit ist weiteren Gattereingängen der Gatter N13 und U11 über einen ersten Inverter IN11 invertiert zugeführt und den übrigen Gattern der ersten Teillogikschaltung direkt zugeführt, das dritte Vorzeichenbit V3 wird über einen zweiten Inverter IN12 den Gattern N12 und U12 invertiert und den übrigen Gattern direkt zugeführt. Wie aus der in Fig. 2 dargestellten Tabelle leicht zu entnehmen ist ist es nicht notwendig, das dritte Vorzeichenbit ebenfalls den Gattern N13 und U11 zuzuführen; diese Verbindungen sind deshalb gestrichelt eingezeichnet.

Die zweite Teillogikschaltung LSI2 ist weitgehend mit der ersten Teillogikschaltung LSI1 identisch. Statt der zweithöchstwertigen Betragsbits $K_7$ werden den Gatterschaltungen N14, N15 und N16 sowie U14, U15 und U16 jedoch die dritthöchstwertigen Betragsbits $K_6^1$, $K_6^2$ und $K_6^3$ zugeführt.

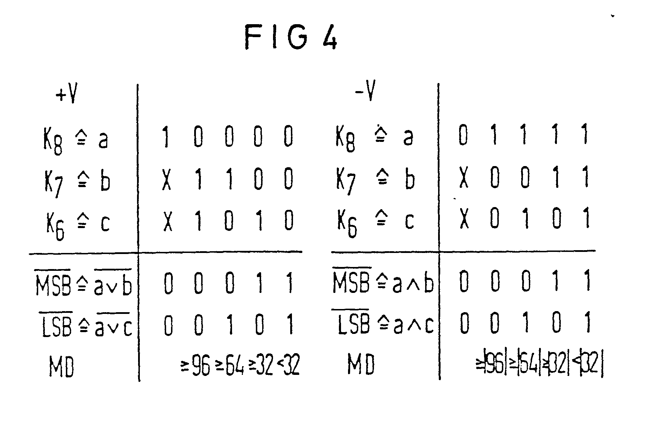

Zum besseren Verständnis der Logikschaltung ist eine Codiertabelle in Fig. 4 angegeben. Für positive und negative Vorzeichen sind getrennt Kombinationen der Zahlenwerte $K_8$ bis $K_6$ dargestellt. Diese sind vereinfachend mit a, b und c bezeichnet. Von der gemachten Annahme ausgehend, daß es sich um das achte bis sechste Bit, die höchstwertigen Bits nach dem Vorzeichenbit, handelt und die Schwellwerte mit 32, 64 und 96 festgelegt sind, kann eine Aufteilung in die entsprechenden Zahlenbereiche durch die gleichzeitig als Schwellwertlogik und Codierschaltung arbeitende Logikschaltung LSI vorgenommen werden. Dies geschieht für positive Vorzeichen "+V" der maximalen Differenz MD durch eine NOR-Verknüpfung (OR-Verknüpfung), für negative Vorzeichen "-V" durch eine UND- (oder NAND)-Verknüpfung. So sind beispielsweise alle ausgewerteten Bits bei einer Differenz < 32 gleich "0". Wird der erste Schwellwert von 32 überschritten, so wird das niederwertigste Bit $K_6$ der betrachteten Differenz zur "1", die beiden höherwertigeren Bits müssen jedoch noch "0" bleiben. Bei negativem Vorzeichen -V der maximalen Differenz sind in der Tabelle logische Nullen und logische Einsen vertauscht. Entsprechend erfolgt die Herausgatterung durch eine UND- oder NAND-Verknüpfung.

Die Codierung aller eventuell benötigten Steuerbits erfolgt für alle Differenzen gleichzeitig. Wie bereits bei der Besprechung der Tabelle in Fig. 2 angegeben, erfolgt die Auswahl der maximalen Differenz durch die Vorzeichenbits. Anstelle der Bits der maximalen Differenz werden jetzt aber die jeweiligen Steuerbits MSB und LSB durchgeschaltet.

Bezogen auf die in Fig. 3 dargestellte Logikschaltung bedeutet dies, daß bei 3 positiven Vorzeichen, das heißt, V1, V2 und V3 entsprechen jeweils einer logischen Null, die NOR-Gatter N11 und N13 aktiviert werden und die logische Eins abgeben können, während die Ausgänge aller übrigen Gatter der ersten Logikstufe die logische Null abgeben. Die an den Ausgängen der ODER-Schaltungen O11 und O12 anliegenden Steuerbits MSB und LSB werden somit allein von der ersten Differenz Z1 bestimmt. Je nach anliegender Kombination der Vorzeichenbits wird in jeder Teillogikschaltung nur ein einziges Gatter der ersten Logikstufe aktiv. Sind alle Differenzen negativ, d.h. alle Vorzeichenbits auf der logischen Eins, so werden die UND-Gatter U13 und U16 durchgeschaltet.

Abweichend von der bisher beschriebenen Zahlenbereichseinteilung sind selbstverständlich noch andere Möglichkeiten denkbar. Es muß jedoch stets dafür gesorgt werden, daß eine zweistufige Logikschaltung erhalten bleibt. Hierzu kann es erforderlich sein, die in Fig. 3 dargestellte Schaltungsanordnung zu erweitern. So kann z. B. das NOR-Gatter N11 durch zwei parallel geschaltete Gatter, deren Ausgänge mit den Eingängen einer ebenfalls zu erweiternden ODER-Schaltung O11 verbunden sind, zur Realisierung einer ODER-Funktion ersetzt werden. Einem der beiden neuen NOR-Gatter wird hierbei die bisherige Kombination der beiden höchstwertigen Betragsbits $K_8^1$ und $K_7^1$ zugeführt, das zweite neue NOR-Gatter erhält dagegen die Kombination der Betragsbits $K_8^1$ und $K_6^1$ zugeführt. Ebenso können natürlich auch Gatter in der ersten Logikstufe mit mehr als fünf Eingängen vorgesehen werden.

Abschließend noch eine Betrachtung zu der Subtraktionseinrichtung SUB. Statt der verwendeten Addierer können selbstverständlich auch Subtraktionsschaltkreise eingesetzt werden, wenn die Laufzeiten dies zulassen. Bei der Verwendung von Addierern wird dann eine Subtraktion korrekt ausgeführt, wenn das Zweierkomplement der zu subtrahierenden Zahl addiert wird. In den meisten Fällen ist es aber ausreichend, wenn alle Bits der zu subtrahierenden Zahl invertiert und anschließend addiert werden. Dies bedeutet im Endergebnis bei einem negativen Vorzeichen der maximalen Differenz einen Fehler in der letzten ausgewerteten Binärstelle. Bei der Einteilung der Zahlenwerte der maximalen Differenz in mehrere Bereiche spielt dieser Fehler im allgemeinen keine Rolle. Er kann natürlich auch durch eine komplizierter aufgebaute Logikschaltung eliminiert werden. Ebenso ist es bei der Weiterverarbeitung der Steuerbits möglich, unter Verwendung des Vorzeichenbits eine exakte Bereichseinteilung zu erzielen.

**Patentansprüche**

1. Schaltungsanordnung zur schnellen Ermittlung der betragsmäßig größten Differenz (MD) zwischen drei binären Zahlenwerten (A, E, F), zur Zuordnung des Betrages der größten Differenz (|MD|) zu einem von mehreren Zahlenbereichen und zur Erzeugung eines dem Bereich entsprechenden Steuersignals (MSB-LSB), insbesondere bei einer Anordnung zur zweidimensionalen DPCM-Codierung mit einem umschaltbaren Quantisierer und einer Quantisierersteuerung, der jeweils der zuletzt errechnete einen Bildpunktsignalwert darstellende Zahlwert (A) und über Register diesem benachbarte Bildpunktsignalwerte (B, C, D, ...) zugeführt sind, wobei eine Vergleichseinrichtung und eine Extremwertsteuerung zur Ermittlung des größten und des kleinsten Zahlenwertes (E, F) der benachbarten Bildpunktsignalwerte (B, C, D, ...) vorgesehen ist, mit einer Subtraktionseinrichtung (SUB) zur Bildung der Differenzen (Z1 = A - E, Z2 = A - F, Z3 = F - E),
_dadurch gekennzeichnet,_
daß für die Zuordnung des Betrages der Differenzen (Z1, Z2, Z3) zu einem Zahlenbereich nur die erforderlichen nach dem Vorzeichenbit höchstwertigen Betragsbits den Eingängen einer zweistufigen Logikschaltung (LSI) zugeführt sind, daß für jedes Steuerbit (MSB, LSB) des Steuersignals (MSB-LSB) eine Teillogikschaltung (LSI1, LSI2) vorgesehen ist, deren aus NOR/OR-Gattern (N11, N12, N13) und AND/NAND-Gattern (U11, U12, U13) bestehende erste Logikstufe eine getrennte Codierung für positive und negative Differenzen (Z1, Z2, Z3) parallel durchführt, daß allen Gattern der ersten Logikstufen der Logikschaltung (LSI) zur Auswahl des der größten betragsmäßigen Differenz (MD) entsprechenden Steuersignals (MSB, LSB) die Vorzeichenbits (V1, V2, V3) zugeführt sind und daß jeweils die Ausgänge aller Gatter der ersten Stufe einer Teillogikschaltung (LSI1, LSI2) jeweils mit den Eingängen einer ODER-Schaltung (O11, O12) verknüpft sind, an deren Ausgang jeweils ein Steuerbit (MSB, LSB) abgegeben wird.

2. Schaltungsanordnung nach Anspruch 1, _dadurch gekennzeichnet,_ daß von jeder Differenz (Z1, Z2, Z3) nur das Vorzeichenbit (V) und die drei folgenden höchstwertigen Betragsbits ($K_8$, $K_7$, $K_6$) der zweistufigen Logikschaltung (LSI) zugeführt sind.

3. Schaltungsanordnung nach Anspruch 1 oder Anspruch 2, _dadurch gekennzeichnet,_ daß der Zahlenwertvorrat der Differenzen (Z1, Z2, Z3) in Zahlenbereiche (MD < 32, 32 ≤ MD < 64, 64 ≤ MD < 96, MD > 96) aufgeteilt ist, deren Grenzen durch eine Potenz von 2 mit ganzzahligen Exponenten entsprechend dem Stellenwert des niederwertigsten für die Festlegung der Zahlenbereiche verwendeten Bits ($K_6$ : $2^5$) oder durch ein ganzzahliges Vielfaches dieser Potenz gebildet werden.

4. Schaltungsanordnung nach Anspruch 2 und 3, _dadurch gekennzeichnet,_ daß vier Zahlenbereiche vorgesehen sind, die von den beiden verwendeten niederwertigeren Betragsbits ($K_7$, $K_6$) festgelegt sind und größere Differenzen (2) dem größten dieser Zahlenbereiche (> 96) zugeordnet werden.

5. Schaltungsanordnung nach Anspruch 4, _dadurch gekennzeichnet,_ daß zwei Teillogikschaltungen (LSI1, LSI2) mit jeweils 3 NOR-Gattern (N11, N12, N13; N14, N15, N16) und jeweils 3 AND-Gattern (U11, U12, U13; U14, U15, U16) vorgesehen sind, deren Ausgänge jeweils mit den Eingängen eines NOR-Gatters (O11, O12) verbunden sind, daß jeweils einem NOR-Gatter (N11, N12, N13) und einem AND-Gatter (U13, U12, U11) der ersten Teillogikschaltung (LSI1) die beiden höchstwertigen Betragsbits ($K_8$, $K_7$) der drei Differenzen (Z1, Z2, Z3) zugeführt sind, daß jeweils einem NOR-Gatter (N14, N15, N16) und einem AND-Gatter (U16, U15, U14) der zweiten Teillogikschaltung (LSI2) jeweils das höchstwertige Betragsbit ($K_8$) und das verwendete niederwertigste Betragsbit ($K_6$) zugeführt sind und daß die Vorzeichenbits (V1, V2, V3) der Differenzen jeweils weiteren Eingängen aller Gatter der ersten Logikstufen zum Durchschalten des der größten Differenz (MD) entsprechenden Steuersignals (MSB-LSB) zugeführt sind.

6. Schaltungsanordnung nach einem der vorhergehenden Ansprüche, _dadurch gekennzeichnet,_ daß sie in monolithischer Integration realisiert ist.

**Claims**

1. Circuit arrangement for the rapid determination of the greatest difference in amount between three numerical values (A, E, F) represented in binary notation, for allocating the amount of the greatest difference to one of several numerical ranges and for generating a control signal (MSB-LSB) corresponding to the range, particularly in an arrangement for two-dimensional DPCM coding with a switchable quantizer and a quantizer control, which are in each case supplied with the numerical value (A), representing a picture element signal value, last calculated, and, via registers, with picture element signal values (B, C, D, ...) which are adjacent to the former, a comparison device and an extreme-value control being provided for determining the greatest and the smallest numerical value (E, F) of the adjacent picture element signal values (B, C, D, ...), with a subtraction device (SUB) for forming the differences (Z1 = A - E, Z2 = A - F, Z3 = F - E), characterized in that, for allocating the amount of the differences (Z1, Z2, Z3) to a numerical range, only the required amount bits which are most significant after the sign bit are supplied to the inputs of a two-stage logic circuit (LSI), in that for each control bit (MSB, LSB) of the control signal (MSB-LSB), a part logic circuit (LSI1, LSI2) is provided, the first logic stage of which, consisting of NOR/OR gates (N11, N12, N13) and AND/NAND gates (U11, U12, U13), carries out a separate coding in parallel for positive and negative differences (Z1, Z2, Z3), in that all gates of the first logic stages of the logic circuit (LSI) are supplied with the sign bits (V1, V2, V3) for selecting the control signal (MSB, LSB) corresponding to the greatest difference (MD) in amount, and in that in each case the outputs of all gates of the first stage of a part logic circuit (LSI1, LSI2) are in each case logically combined with the inputs of an OR circuit (011, 012), at the output of which in each case a control bit (MSB, LSB) is delivered.

2. Circuit arrangement according to Claim 1, characterized in that only the sign bit (V) and the three following most-significant amount bits ($K_8$, $K_7$, $K_6$) of each difference (Z1, Z2, Z3) are supplied to the two-stage logic circuit (LSI).

3. Circuit arrangement according to Claim 1 or Claim 2, characterized in that the set of numerical values of the differences (Z1, Z2, Z3) is divided into numerical ranges (MD < 32, 32 ⩽ MD < 64, 64 ⩽ MD < 96, MD > 96), the limits of which are formed by a power of 2 with integral exponents corresponding to the position value of the least significant bit ($K_6 : 2^5$) used for determining the numerical ranges or by an integral multiple of this power.

4. Circuit arrangement according to Claim 2 and 3, characterized in that four numerical ranges are provided, which are defined by the two least-significant amount bits ($K_7$, $K_6$) used, and greater differences (2) are allocated to the greatest of these numerical ranges (> 96).

5. Circuit arrangement according to Claim 4, characterized in that two part logic circuits (LSI1, LSI2) having in each case 3 NOR gates (N11, N12, N13; N14, N15, N16) and in each case 3 AND gates (U11, U12, U13; U14, U15, U16) are provided, the outputs of which are in each case connected to the inputs of a NOR gate (011, 012), in that in each case the two most-significant amount bits ($K_8$, $K_7$) of the three differences (Z1, Z2, Z3) are supplied to a NOR gate (N11, N12, N13) and to an AND gate (U13, U12, U11) of the first part logic circuit (LSI1), in that in each case the most significant amount bit ($K_8$) and the least-significant amount bit ($K_6$) used are in each case supplied to a NOR gate (N14, N15, N16) and to an AND gate (U16, U15, U14) of the second part logic circuit (LSI2) and in that the sign bits (V1, V2, V3) of the differences are in each case supplied to further inputs of all gates of the first logic stages for switching through the control signal (MSB-LSB) corresponding to the greatest difference (MD).

6. Circuit arrangement according to one of the preceding claims, characterized in that it is implemented in monolithic integration.

**Revendications**

1. Circuit pour déterminer rapidement la plus grande différence (MD), en valeur, entre trois valeurs numériques binaires (A, E, F), en vue de la coordination de la valeur de la plus grande différence (MD) l'une de plusieurs gammes de nombres et en vue de la génération d'un signal de commande (MSB-LSB) correspondant à cette gamme, en particulier pour un dispositif de codage DPCM (modulation différentielle impulsion-code) bidimensionnel, comprenant un quantificateur commutable et une commande de quantificateur, à laquelle sont appliquées chaque fois la valeur numérique (A) calculée en dernier et représentant la valeur d'un signal de point d'image, ainsi que, à travers des registres, des valeurs de signal de point d'image (B, C, D, ...) voisines de cette valeur, avec prévision d'un dispositif de comparaison et d'une commande de valeur extrême pour déterminer la valeur numérique la plus grande et la valeur numérique la plus petite (E, F) des valeurs de signal de point d'image voisines (B, C, D, ...), de même qu'un dispositif de soustraction (SUB) pour la formation des différences (Z1 = A - E, Z2 = A - F, Z3 = F - E)

caractérisé en ce que,

pour la coordination de la valeur des différences (Z1, Z2, Z3) à une gamme de nombres, seuls les bits de valeur numériques, faisant suite au signe et ayant le poids le plus fort, sont appliqués aux entrées d'un circuit logique (LSI) à deux étages, qu'un circuit logique partiel (LSI1, LSI2) est prévu pour chaque bit de commande (MSB, LSB) du signal de commande (MSB-LSB), dont le premier étage logique, composé de portes NOR/OU (N11, N12, N13) et de portes ET/NAND (U11, U12, U13), exécute, en parallèle, un codage séparé pour des différences positives et négatives (Z1, Z2, Z3), que les bits de signe (V1, V2, V3) sont appliqués à toutes les portes des premiers étages logiques du circuit logique (LSI), en vue de la sélection du signal de commande (MSB, LSB) correspondant à la plus grande différence en valeur (MD), et que les sorties de toutes les portes du premier étage d'un circuit logique partiel (LSI1, LSI2) sont connectées chaque fois aux entrées d'un circuit OU (011, 012) dont la sortie délivre chaque fois un bit de commande (MSB, LSB).

2. Circuit selon la revendication 1, caractérisé en ce que, de chaque différence (Z1, Z2, Z3), seulement le bit de signe (V) et les trois bits de valeur suivants de poids le plus fort ($K_8$, $K_7$, $K_6$), sont appliqués au circuit logique (LSI) à deux étages.

3. Circuit selon la revendication 1 ou 2, caractérisé en ce que l'ensemble des valeurs numériques utilisées pour les différences (Z1, Z2, Z3) est divisé en gammes de nombres (MD < 32, 32 ⩽ MD < 64, 64 ⩽ MD > 96) dont les limites sont formées par une puissance de 2 avec un exposant de nombre entier correspondant à la position du bit ($K_6 : 2^5$) de poids le plus faible utilisé pour la fixation des gammes de nombres ou par un multiple de nombre entier de cette puissance.

4. Circuit selon les revendications 2 et 3, caractérisé par la prévision de quatre gammes de nombres, qui sont fixées par les deux bits de valeur ($K_7$, $K_6$) de poids plus faible utilisés et que les différences (2) plus grandes sont coordonnées à la plus élevée de ces gammes de nombres (> 96).

5. Circuit selon la revendication 4, caractérisé par le fait qu'il est prévu deux circuits logiques partiels (LSI1, LSI2), comportant chacun 3 portes NOR (N11, N12, N13; N14, N15, N16) et 3 portes ET (U11, U12, U13; U14, U15, U16) dont les sorties sont reliées aux entrées d'un circuit OU (O11, O12), que les deux bits de valeur ($K_8$, $K_7$) de poids le plus fort des trois différences (Z1, Z2, Z3) sont appliqués à une porte NOR (N11, N12, N13) et une porte ET (U13, U12, U11) du premier circuit logique partiel (LSI1), que le bit de valeur ($K_8$) de poids le plus fort et le bit de valeur ($K_6$) de poids le plus faible utilisé sont appliqués à une porte NOR (N14, N15, N16) et une porte ET (U16, U15, U14) du second circuit logique partiel (LSI2) et que les bits de signe (V1, V2, V3) des différences sont appliqués à d'autres entrées de toutes les portes des premiers étages logiques en vue de la transmission du signal de commande (MSB, LSB) correspondant à la plus grande différence (MD).

6. Circuit selon une des revendications précédentes, caractérisé en ce qu'il est réalisé sous forme d'un circuit intégré monolithique.

# FIG 1

# FIG 2

| V | | | | | | | | |
|---|---|---|---|---|---|---|---|---|
| A - E | + | + | + | ( + | - ) | - | - | - |
| A - F | + | + | - | ( - | + ) | + | - | - |
| F - E | + | - | + | ( - | + ) | - | + | - |
| MD | A-E | A-F | F-E | ╳ | | F-E | A-F | A-E |
| V(MD) | + | + | + | | | - | - | - |

FIG 3

LSI

LSI 2

LSI 1

U16 U15 U14 N16 N15 N14

U13 U12 U11 N13 N12 N11

O12 LSB

O11 MSB

$IZ1I$  $K_7^1$ $K_6^1$  $K_8^1$
$IZ2I$  $K_7^2$ $K_6^2$  $K_8^2$
$IZ3I$  $K_7^3$ $K_6^3$  $K_8^3$

V1 V2 V3 IN11 IN12

3

# FIG 4

| +V | | | | | |
|---|---|---|---|---|---|
| $K_8 \mathrel{\hat{=}} a$ | 1 | 0 | 0 | 0 | 0 |
| $K_7 \mathrel{\hat{=}} b$ | X | 1 | 1 | 0 | 0 |
| $K_6 \mathrel{\hat{=}} c$ | X | 1 | 0 | 1 | 0 |
| $\overline{MSB} \mathrel{\hat{=}} \overline{a \vee b}$ | 0 | 0 | 0 | 1 | 1 |
| $\overline{LSB} \mathrel{\hat{=}} \overline{a \vee c}$ | 0 | 0 | 1 | 0 | 1 |
| MD | | $\geq 96$ | $\geq 64$ | $\geq 32$ | $< 32$ |

| -V | | | | | |
|---|---|---|---|---|---|
| $K_8 \mathrel{\hat{=}} a$ | 0 | 1 | 1 | 1 | 1 |
| $K_7 \mathrel{\hat{=}} b$ | X | 0 | 0 | 1 | 1 |
| $K_6 \mathrel{\hat{=}} c$ | X | 0 | 1 | 0 | 1 |
| $\overline{MSB} \mathrel{\hat{=}} a \wedge b$ | 0 | 0 | 0 | 1 | 1 |
| $\overline{LSB} \mathrel{\hat{=}} a \wedge c$ | 0 | 0 | 1 | 0 | 1 |
| MD | | $\geq |96|$ | $\geq |64|$ | $\geq |32|$ | $< |32|$ |